# EUROPEAN PATENT SPECIFICATION

(11) **EP 2 603 783 B1**
(45) Date of publication and mention of the grant of the patent: **29.08.2018**
(21) Application number: 10768258.5
(22) Date of filing: 25.10.2010
(51) Int. Cl.: G01M 3/22, G01M 3/32, G01M 3/20

(54) **METHOD AND APPARATUS FOR LEAK TESTING CONTAINERS**
VERFAHREN UND VORRICHTUNG ZUR DICHTIGKEITSPRÜFUNG VON BEHÄLTERN
PROCÉDÉ ET APPAREIL POUR SOUMETTRE DES CONTENANTS À UN ESSAI D'ÉTANCHÉITÉ

(30) Priority: 10.08.2010 EP 10172402; 26.08.2010 US 869492
(43) Date of publication of application: 19.06.2013
(73) Proprietor: Wilco AG, 5610 Wohlen (CH)
(72) Inventor: LEHMANN, Martin, CH-5610 Wohlen (CH)
(74) Representative: Troesch Scheidegger Werner AG
(86) International application number: PCT/EP2010/066058
(87) International publication number: WO 2011/012730

(56) References cited:
- EP-A2- 0 791 814
- WO-A1-99/46572
- US-A1- 2005 079 620

## Description

### Technical Field

The present invention relates to the field of leak testing closed containers which are filled with a product to be stored therein up to release of such product from the container by its opening at a desired moment. We call such product throughout the present description and claims "consumer product".

Thereby, the term "leak" shall be understood under a broad aspect addressing any transition of a material, the material composition thereof being dependent from the consumer product, through the encapsulation of such consumer product by the closed container. Thus, it may be said that leakiness may also be considered under the aspect of diffusion characteristics of the encapsulation by the container with respect to a material which is dependent from the consumer product.

### Background of the invention

Various ways of evaluating whether a container is leaky or not are known.

One known technique to evaluate leakiness of a container is the so called tracer gas technique. Thereby, a tracer gas as e.g. helium or another noble gas, nitrogen or hydrogen is introduced into the container. Then the container is closed. Transition of tracer gas through the now close encapsulation by the container is monitored - sniffed in the surrounding of the container for leak testing purposes.

This technique is therefore also known as sniffer technique. For the purpose of sniffing whether tracer gas transits from the interior of the container to its surrounding it is known to apply mass spectrometry. With respect to such an approach attention is drawn e.g. on the DE 33 40 353.

The tracer gas which is present in the closed container in tracer gas technique is provided exclusively for leak testing purposes and is thus not or does not form part of the consumer product to be stored within the container.

This is even true if such tracer gas, e.g. Nitrogen, is filled into the container simultaneously with a consumer product but exclusively with the target of subsequent Nitrogen sniffing.

A further technique known for testing leakiness of close containers filled with a consumer product may be addressed, generically, as pressure course technique. Thereby, a pressure difference is applied between the inside and the surrounding of the close and filled container. This may be performed by lowering the pressure in the surrounding of the container relative to the pressure inside the closed container. This approach resides upon the fact that if the container is leaky, there occurs pressure equalization between the inside of the container and its surrounding. A course of pressure in the surrounding of the container may be sensed and exploited as a leak indicative signal. With respect to such leak testing techniques, realized by lowering the pressure in the surrounding of the container with respect to the (initial) pressure inside the container, we may refer e.g. to US 5 029 464, US 5 170 660, US 5 239 859, US 5 915 270, all of the same applicant as the present application.

An improvement over the technique just addressed, especially for leak testing closed containers with a consumer product comprising a free liquid which covers at least a part of the inner surface of the container may be addressed generically as vaporizing technique. In this technique the pressure in the surrounding of the container is lowered at least to vapor pressure of a liquid component of the consumer product. There results that any such liquid component which is exposed, as through a leak, to the addressed vapor pressure is high-rate evaporated into the surrounding. This leads to a highly significant, accurately detectable leak indicative pressure course in the surrounding. With respect to this technique we may refer to US 5 907 093, US 6 082 184, US 6 202 477, US 6 305 215, US 6 439 033, US 6 575 016, US 6 829 936, US 7 000 456 and further related patent documents, all of the same applicant as the present application.

Moreover, a further known leak testing technique is based on mechanical squeezing the close containers filled with a consumer product as e.g. disclosed in US 6 439 039 of the same applicant and/or are based on impedance measurement in the surrounding of the closed container filled with a consumer product as disclosed in the US 5 962 776, also of the same applicant as the present application.

Furthermore, US 2005/079620 A1 describes methods for testing the hermeticity of casings for power sources intended to power implantable medical device by sensing the presence of vapors escaping from an electrolyte contained therein. More broadly, the described leak detection methods are applicable to any sealed enclosure having a first part sealed to a second part with a liquid contained therein. The liquid need not occupy the entire volume of the enclosure, but must contain at least one component having a vapor pressure at 25°C of more than about 0.1 mm Hg. This component can assist in the functioning of the device such as an electrolyte, or be added for the sole purpose of leak detection.

Moreover, WO 99/46572 A1 is directed to a method and apparatus for non-destructive testing for a leak in a sealed impermeable package containing gas and/or volatile liquid, which acts as an indicator gas. The method includes placing the hermetically sealed package containing an indicator gas in a test chamber. The atmosphere in the test chamber is evacuated. The pressure in the test chamber is measured at a predetermined interval to determine whether a gross leak exists in the package. The atmosphere in the test chamber is purged. The atmosphere is evacuated to a predetermined pressure. The calibration gas is allowed to accumulate at a predetermined rate in the chamber during an interval of time. The ratio of indicator gas to calibration gas is measured and the ratio is compared against a predetermined ratio of indicator gas to calibration gas for the interval of time to determine whether a leak exists in the hermetically sealed package.

### Summary of the invention

It is an object of the present invention to further push forwards leak detection accuracy for closed containers which are filled with a consumer product. This is achieved by a method for leak testing containers filled with a consumer product according to claim 1.

The consumer product may be solid, liquid or gaseous or comprise material in two or three of the addressed states of aggregation.

When we address that the analyte, presence of which being monitored in the surrounding of the container, has a material composition which is "dependent" from the consumer product, this shall mean that at least one component of the analyte is equal to a component present in the consumer product and/or that at least one component of the analyte results from a chemical reaction or from a physical treatment into which the consumer product is involved as a source material. Thus and as examples, the analyte may be the unchanged consumer product, the consumer product in a changed state of aggregation, e.g. changed from solid to gaseous, the consumer product in a changed chemical composition e.g. due to decomposition over time, one or more than one unchanged component of the consumer product, one or more than one component of the consumer product in a changed state of aggregation, e.g. changed from solid to gaseous, one or more than one component of the consumer product in a changed chemical composition, e.g. due to decomposition over time.

In one mode of the method according to the invention the consumer product comprises at least one of a solid and of a liquid product material and the analyte is dependent on at least one of said product materials.

With respect to the term "dependent" from at least one product material, the analogue definition applies as was defined for dependency from consumer product.

In one mode of the method according to the present invention the analyte is in gaseous state or the analyte is in solid and/or liquid state and converted in gaseous state before performing said mass spectrometry.

In a further mode of the method according to the invention the consumer product comprises material in gaseous state and the analyte depends from such material in gaseous state.

In one mode of the method according to the invention the mass spectrometry comprises applying a quadrupole mass spectrometer arrangement.

In a further mode of the method according to the invention the mass spectrometry comprises applying selected ion flow tube mass spectrometry, SIFT.

With respect to this SIFT mass spectrometric technique we refer e.g. to:
- "SIFT-MS", Selected Ion Flow Tube mass spectrometry, Technology Overview, 2007, Syft Technologies, New Zealand;
- Syft Technologies, White Paper, March 5, 2004, Real-time Resolution of Analytes, without Chromatographic Separation;
- Syft Technologies, White Paper, February 24, 2004, From flowing afterglow to SIFT-MS - the emergence of commercially viable SIFT-MS instruments;
- New product announcement from Syft Technologies New Zealand, Voice 200 SIFT-MS at Its Best.

The present invention is also directed on a method of manufacturing closed containers filled with a consumer product and which are unleaky, comprising providing a container, filling the container exclusively with a consumer product which the container is intended to store, closing the filled container and subjecting the closed and filled container to the method of leak testing as was addressed above under at least one of its different modes and establishing the container to be unleaky in dependency of the result of the monitoring by the addressed method of leak testing.

The object as addressed above is further resolved by an apparatus for leak testing closed and filled containers according to claim 8.

One embodiment of the apparatus according to the invention comprises a leak testing stage operating without mass spectrometry and generating a leak indicating signal for each of the containers, the leak indicating signal disabling an operational connection of the inside of a respective test chamber to the mass spectrometer. According to one embodiment of the apparatus according to the invention each of the test chambers is controllably connected to an evacuating arrangement and to at least one pressure sensor, the output of the pressure sensor is operationally connected to an input of an evaluation unit generating an output signal indicating a leak of a container under test in the respective test chamber, the output signal disabling an operational connection from said respective test chamber to said mass spectrometer.
One embodiment of the apparatus according to the invention comprises a multiplexing arrangement time multiplexing an operational connection of the test chambers to the mass spectrometer.
In one embodiment of the apparatus according to the invention the mass spectrometer is controllably operationally connected to the inside of each of said test chambers via a respective probe chamber.

In one embodiment of the apparatus according to the invention the mass spectrometer is a quadrupole mass spectrometer.
In one embodiment of the apparatus according to the invention the mass spectrometer is a selected ion flow tube mass spectrometer, SIFT.

One embodiment of the apparatus according to the invention comprises at least one of:
- a heating and/or cooling arrangement for a line arrangement interconnecting the outside surface of a respective container and the mass spectrometer;
- a flushing gas source in controlled communication with a line arrangement interconnecting the outside surface of a respective container and the mass spectrometer;
- a plasma source and a reactive gas source acting upon a line arrangement interconnecting the outside surface of a respective container and said mass spectrometer.

The invention shall be further explained by examples with the help of figures. The figures show:
- Fig. 1: generically and by means of a functional diagram, an apparatus and a corresponding method which are not covered by the present claims.
- Fig. 2: in a representation in analogy to that of fig. 1, generically more detailed the testing function as of fig. 1 and as realized by an apparatus and a corresponding method which are not covered by the present claims;
- Fig. 3: still in a representation in analogy to those of figs. 1 and 2, one example of performing testing according to an apparatus and a corresponding method which are not covered the present claims;
- Fig. 4: in a schematic representation by means of a signal flow/functional block diagram, an apparatus and a corresponding method which are not covered by the claims;
- Fig. 5: by means of a simplified signal flow/functional block diagram, an apparatus and a corresponding method which are not covered by the claims;
- Fig. 6: in a simplified, schematic, perspectivic representation in the form of a signal flow/functional block diagram, an apparatus and a corresponding method not covered by the present claims for inline testing of containers or inline manufacturing unleaky containers, and
- Fig. 7: in a simplified representation, one embodiment of a collector arrangement as provided e.g. in the embodiment of fig. 6, operating one mode of the method according to the present invention.
As was already addressed, the present invention relates to the field of quality control of closed and consumer product filled containers, with respect to transition of a product which is materially dependent from the consumer product through the container encapsulation into its surrounding atmosphere and thus to leak testing in a broad sense. The method and apparatus according to the invention find application, e.g., in food industry and pharmaceutical industry.

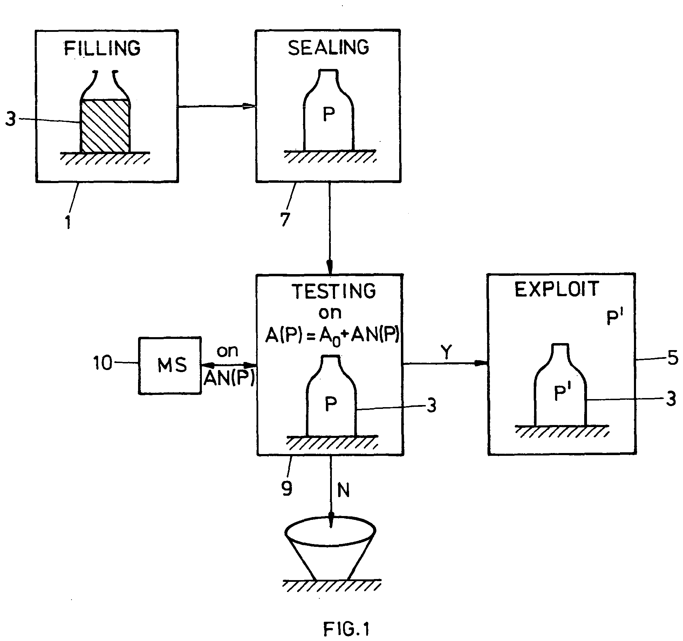

Although the invention has been amply described and taught in the introductory part of the description, it shall be further exemplified with the help of figures.
According to fig. 1 there are most generically shown processing steps. This under all its aspects of a method for leak testing, a method of manufacturing unleaky containers and the respective apparatus.
In a step 1 addressed by "FILLING" a container 3 is filled with the product. If the filling product is not exclusively gaseous, there may or may not remain in the container 3 a space as shown in fig. 1 filled with a gas. Irrespective of the fact whether the container 3 is filled with a gas and/or a liquid and/or a solid, we address the overall content of the container after the filling step as "consumer product" P. As may be seen in fig. 1 a container 3 which has passed through processing is exploited in the step addressed by "exploit" 5. The product P' which is exploited from container 3 according to step 5 for a respective use is the product P which is present in the container 3 after the filling step 1 and sealing step 7 or the product P which has changed within the container 3 in the time span between filling/sealing and exploitation as by deterioration. This as if such container was not subjected to the testing step 9, but such container was filled, sealed and then just led to exploitation as e.g. delivered to a consumer.

In other words no product is added to the container 3 which would be specifically and exclusively provided to perform the specific processing step 9 according to the present invention. After the container 3 has been filled with the addressed consumer product P, the container is sealed as schematically shown in fig. 1 by a sealing step 7. Such sealing is maintained during the subsequent processing step 9 up to exploitation in step 5. After performing the sealing step 7 the container is subjected to the analyzing or TESTING step 9. In this test or analyzing step 9 there is investigated, whether product P as contained in the container after sealing step 7 or a product which results from the product contained in the container 3 has an impact on the atmosphere A which surrounds the container 3 subjected to step 9. Thus, we may address the testing to be performed upon the atmosphere A which surrounds, during performing testing or analyzing, a sealed container 3 with respect to the fact whether the product P or a reaction product of product P has a material impact on atmosphere A. Such impact is dependent from product P and thus the resulting atmosphere is addressed in Fig. 1 by A(P). Thus we may say that the prevailing atmosphere surrounding a container to be tested is A(P)and consists of the surrounding atmosphere without any leakage, A₀ and the material impact depending from the consumer product and leakiness, AN (P) which we call analyte as it is the presence of this impact AN(P) which is monitored according to the invention to finally determine whether the container is unleaky.

If the analyzing or testing step 9 reveals by its result that the container does not fulfil predetermined conditions with respect to leakiness, then such container is rejected as addressed in fig. 1 by the output arrow N for "no". Only if the addressed container having been analyzed or tested fulfils - Y - the addressed conditions, then it is freed for exploitation in generic step 5.

As has already been addressed before, the present invention resides on analyzing presence of an analyte AN(P) dependent from product P in the atmosphere A(P), by means of mass spectrometry, also called mass spectroscopy . Thus, the analyzing or testing step 9 of fig. 1 includes or comprises mass spectrometry - MS - analyzing so as to finally conclude upon unleakiness of the container -Y-. Please note again that the product of the container as exploited - step 5 - needs not necessarily be identical to the product in the container when sealed - step 7 - due to possible container internal product reaction. Therefore, the product is addressed by P' in step 5.

Irrespective whether the product in the container has changed or not at the instance of performing the testing step 9, the analyte AN(P) which is monitored in this testing step is always dependent on the consumer product filled in the container.

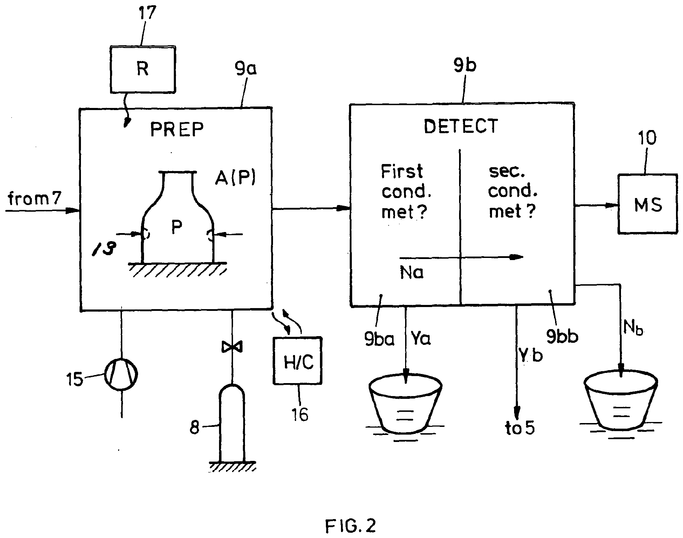

Nevertheless and as will be schematically and principally explained in context with fig. 2, it might be that a container analyzed in step 9 of fig. 1 is checked upon fulfilling first predetermined conditions before a monitoring step by mass spectrometry is at all applied, i.e. to check on fulfilling second predetermined conditions. An example: If a container under test is heavily leaking it might be advisable not to have such container to interact with the mass spectrometry equipment so as not to overload or saturate such equipment by extensive amount of product pouring out of the container. This is achieved by detecting first whether the container is or is not heavily leaking (fist predetermined conditions) and by only activating mass spectrometry analyzing if no heavy leaking is detected.

Fig. 2 most schematically and generically addresses such processing. After having performed the sealing step 7 as of fig. 1 the testing or analyzing step 9 is performed. According to fig. 2 this testing or analyzing step 9, as an example, may comprise a preparatory step "PREP" 9a upon the consumer product in the container.

The consumer product in the container may be in liquid state at any viscosity and/or in solid state as powderous and/or in gaseous state. Depending on the one or more than one aggregate state of the consumer product, it is advisable to perform the addressed preparing step so as to at all allow or to increase transition of the analyte AN(P) through a possibly existing leak in the container. As was addressed, such leak most generically may even include a respectively high diffusion rate through the wall of the container.

In this preparatory step PREP 9a e.g. in a testing chamber (not shown) the container 3 is e.g. pressurized with a pressurizing source of pressurised gas 8 and/or is mechanically compressed as shown at 13, if at least a part of the container wall is flexible. The preparatory step PREP 9a may further comprise evacuating the surrounding of the container as by a vacuum pump 15, heating or cooling the consumer product by a heating and/or cooling arrangement 16 or exposing the consumer product to electromagnetic or to light radiation 17. The preparatory step may thus provide for an interaction with the consumer product P which allows or facilitates transition of an analyte AN(P) dependent from the consumer product P through a leak into the atmosphere A(P) and which interaction only reversibly or only neglectably changes the consumer product P with respect to its desired exploitation.

After such preparatory step PREP 9a performed, the container is subjected to the detection step DETECT 9b of the overall testing or analyzing step 9. Thereby, as schematically shown in fig. 2, as a first stage 9ba of the detection step 9b there is first detected whether the container being tested fulfils first leakiness conditions, i.e. has a large leak. If there is detected that such first conditions, as preestablished, are fulfilled - Ya - this means the container has a leakage in excess of a predetermined threshold extent. In this case the container is rejected. If the container being tested does not fulfil the addressed first conditions, i.e. has no "large leak" and is thus tight within the frame of the predetermined first tightness conditions, such container - Na - is subjected to the second detection step 9bb, which step is performed by monitoring with the mass spectrometry - 10 - thereby analyzing the surrounding atmosphere A(P) of the container upon presence of the analyte AN (P) and possibly upon the amount of AN(P) present. If and only if such monitoring by mass spectrometry reveals that the container fulfils the second predetermined conditions, e.g. has a leakiness below a predetermined extent, such container as addressed by Y_{bb} is considered unleaky and is freed for further exploitation according to step 5 of fig. 1, otherwise, as addressed by N_{b}, the container is rejected as leaky.

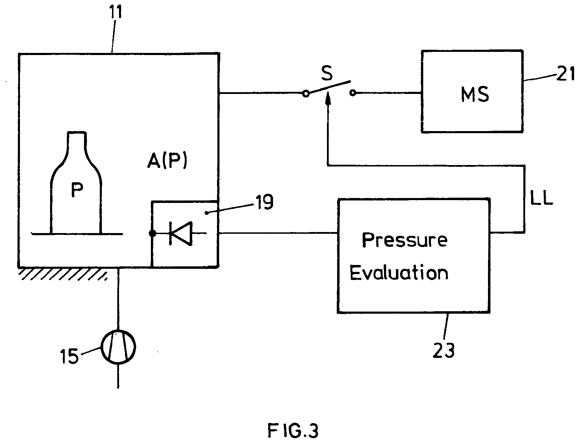

In fig. 3 there is, again most schematically, shown one possibility of performing the two sub-step detection step 9b of fig. 2. The container has been prepared according to step PREP 9a of fig. 2 by evacuating a testing chamber 11 wherein the container to be tested is accommodated. Operationally connected to the testing chamber 11, there is provided a pressure sensor arrangement 19 as well as the mass spectrometry equipment 21. The sub-detection step 9_{ba} for large leak detection is performed by evaluating the pressure course in the surrounding atmosphere A(P) of the container 3. This is addressed in fig. 3 by pressure evaluation unit 23. With respect to such pressure evaluation technique we e.g. refer to the US 5 907 093 and/or US 6 305 215, both of the same applicant as the present application, which are with respect to large leak detection of liquid-filled containers to be considered as integrated part of the present description by reference.

If the pressure evaluation unit 23 detects leakiness in excess of a predetermined amount and as addressed by signal "LL" in fig. 3, operational connection S of the test chamber 11 to the mass spectrometry equipment 21 is disabled. Only if pressure evaluation in unit 23 reveals that no large leak of the container is present, then operational connection S of the test chamber 11 to the mass spectrometry equipment 21 is enabled, i.e. S in fig. 3 is closed.

As was addressed above, containers which are filled and sealed shall be tested or analyzed according to step 9 of fig. 1, in one mode of the invention, in "inline" manner, i.e. the containers are then conveyed in a stream towards, trough and from a station whereat testing step 9 is performed. Especially such processing necessitates making use of a mass spectrometry equipment, which allows short-time consecutive analyzing. At the present moment it has been found that a SIFT-mass spectrometry technique as e.g. addressed in the papers mentioned above is most suited to be applied in the present invention.

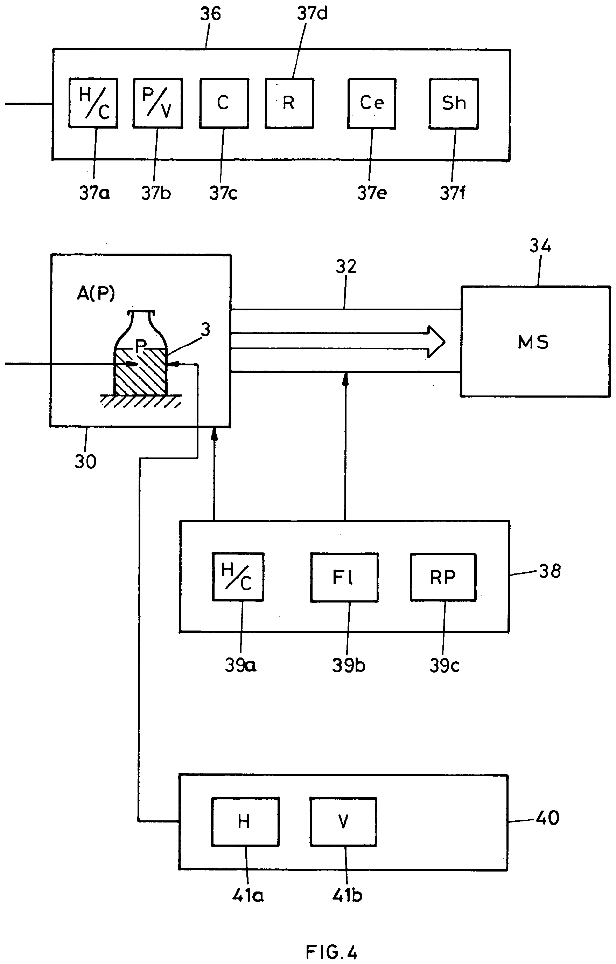

In fig. 4 there is schematically shown in a different representation, the main structures and steps as exploited during the testing step 9 as of fig. 1. The close container 3 with consumer product P is accommodated in a well-defined surrounding atmosphere which is initially Aₒ and becomes, in dependency of the consumer product P, A(P). Depending on leakiness of the container 3 analyte AN(P) which is dependent of the consumer product P penetrates into the addressed surrounding leading to A(P) = Aₒ + AN(P).

To establish such well-defined surrounding atmosphere Aₒ the container 3 to be tested is accommodated in a test chamber 30. There is established a controlled operational connection as schematically shown in fig. 4 by 32 between the inside of the test chamber 30 and the mass spectrometer 34.

As we have already addressed there may be performed before establishing the controlled operational connection 32 a preparatory step PREP 9a to the consumer product P within the container 3, by which there is enabled or increased a transition of the analyte depending on the consumer product P from the inside of the container 3 into the surrounding atmosphere A(P) in the test chamber 30 if the container 3 has a leak.

This preparatory step which has already been addressed in context with fig. 2 is schematically shown in fig. 4 by the block 36. The preparatory step interacts primarily with the consumer product P in the container 3. This step may be performed by a heater and/or cooling arrangement 37a and/or by a pressurizing or vacuumizing arrangement 37b for the inside of the test chamber 30 and/or by a compressing arrangement 37c by which the container 3 is compressed by mechanical forces and/or by a radiation unit 37d, by which the consumer product P is exposed to electromagnetic radiation and/or to light radiation in the visible and/or in the non-visible spectrum as to ultraviolet light. Further, the preparatory step according to block 36 may comprise a centrifugating arrangement 37e and/or a shaking arrangement 37f, both for the container 3.

There is further advantageously provided a further step before applying the preparatory step according to block 36 which further step is a conditioning step and is represented in fig. 4 by block 38. Generically by this conditioning step the atmosphere Aₒ which is to surround the container 3, thus the inside of the test chamber 30 as well as of the operational gas-stream connection 32 between the inside of the test chamber 30 and the input to the mass spectrometer 34, is conditioned to remove or neutralize contaminants which have possibly been absorbed at rigid surfaces within the test chamber and the addressed operational connection 32 and which e.g. by desorption may negatively affect subsequent sensing accuracy by the mass spectrometer 34. Thus, generically the addressed conditioning step as of block 38 affects the test chamber as well as the system 32 providing for the operational connection between the test chamber 30 and the mass spectrometer 34. The conditioning step for the addressed interconnection between the test chamber 3 and the mass spectrometer input may be performed before and/or after the container 3 to be tested is accommodated in the test chamber 3. Such conditioning step may be performed e.g. by means of a heating and/or a cooling arrangement 39a and/or by a gas flushing arrangement 39b and/or by a reactive plasma etching arrangement 39b. By the reactive plasma etching arrangement a reactive gas as e.g. nitrogen, may be plasma activated and fed into the addressed system so as to clean solid surfaces which might have been contaminated.

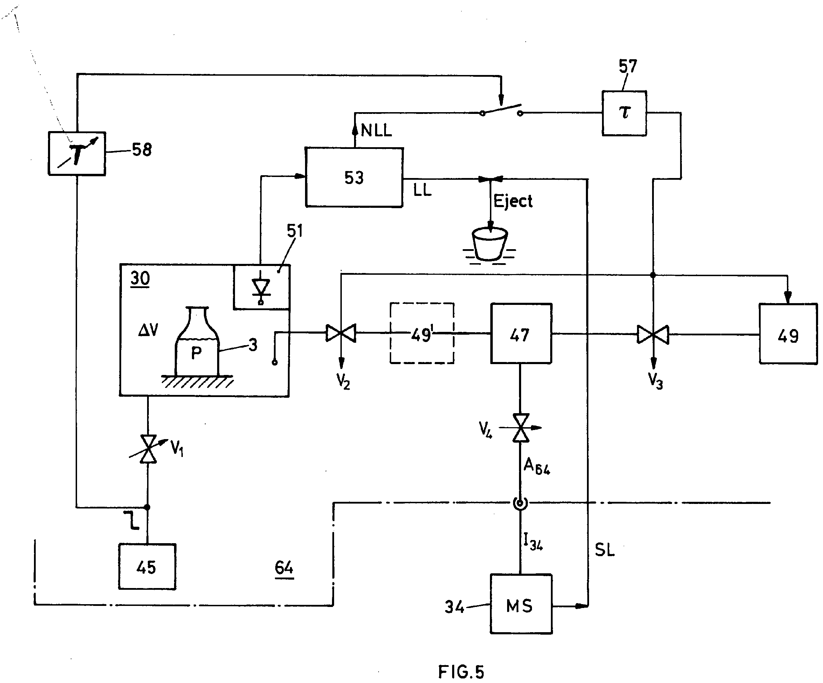

If the consumer product P comprises material in liquid and/or solid aggregate state and thus the analyte which possibly transits through a leak of the container may as well be liquid and/or solid, there should be provided a further step of converting the addressed liquid or solid state of the analyte AN(P) into gaseous aggregate state. This further step is addressed by a gasifying step. According to fig. 4 such gasifying step is represented by block 40. Generically, this step interacts with the analyte AN(P). This gasifying step may be performed by a heating arrangement 41a and/or by an evacuating arrangement 41b. By means of the heating arrangement a liquid and/or solid state analyte is gasified. By an evacuation arrangement a liquid analyte is gasified by lowering the pressure within the test chamber to or below vapour pressure of the liquid analyte.
When e.g. looking at the preparatory step 36 being possibly performed by an evacuation arrangement 37b and upon the gasifying step being possibly performed by an evacuating arrangement 41b, it becomes clear that a respective evacuating arrangement may operate for both, product preparation as well as gasifying. As an example, if in the preparatory step there is applied an evacuation arrangement 37b which evacuates the inside of the test chamber 3 to a pressure which is below vapour pressure of a liquid analyte, then such analyte is not only urged to the outside of the container due to lowering the pressure in the test chamber, but additionally such liquid analyte is gasified. In fig. 5 there is shown, schematically and simplified, an apparatus and a corresponding method. In test chamber 30 there has been accommodated a container 3 with consumer content P e.g. comprising a liquid component. A vacuumizing arrangement 45 is connected via controllable valve V₁ to the test chamber 30. Via a controllable valve V₂ the test chamber is further connected to a probe chamber 47 which is, via a valve V₃, operationally connected to a further vacuumizing arrangement 49. Via a controllable valve V₄ the probe chamber 47 is further operationally connected to the input I₃₄ of mass spectrometer arrangement 34.

By means of the vacuumizing arrangement 45, valve V₁ being open, the test chamber 30 is evacuated, thereby, as the consumer product P comprises a liquid component, preferably at least down to a pressure level according to vapour pressure of the addressed liquid component to be exploited as an analyte. By doing so on one hand such liquid component is urged through a possibly existing leak in the container 3, and as exposed to the low value pressure, is gasified by evaporation.

During a first time span it is determined whether the container 3 has a leak which is too large to allow connection of the test chamber 30 to the mass spectrometer arrangement 34. This is, as schematically shown in fig. 3, performed by exploiting the pressure course in the test chamber 30 by means of a pressure sensor arrangement 51 and a pressure course evaluating unit 53. The pressure course evaluation unit generates an output signal LL if the pressure course within the test chamber 30 indicates that the container 3 has a leak which is larger than a predetermined extent. Occurrence of the signal LL directly leads to disabling the further leak testing operation and rejecting the container 3 presently under test as leaky. If the evaluation unit 53 detects that the container has no leak which is larger than the addressed predetermined extent, there is generated a "no large leak" signal NLL at an output of evaluation unit 53. Possibly after an adjustable time span T shown in fig. 5 by delay unit 58 the NLL signal controls during a short time span τ as shown in fig. 5 by a one-shot unit 57 opening of valve V₂ and of a valve V₃, and enables pumping arrangement 49. Thereby, a probe of gas is transferred from the test chamber 30 into the probe chamber 47. After the time span τ the valves V₂ and V₃ are closed again and the pumping arrangement 49 is disabled.

The time span T started e.g. after disabling evacuation of the test chamber 30 by the pumping arrangement 45 substantially influences the largeness of a leak which is detectable by the mass spectrometer 34. This because at a given leak rate at the container 3, the amount of analyte AN(P) present in the test atmosphere surrounding the container 3 in the test chamber 30 is substantially determined by the time integral of the leak rate over the time span T.

Therefore, generically the time span T is to be selected the longer the smaller the leaks are which are accurately to be detected.

Once the probe chamber 47 has been isolated on one hand from the test chamber 30 and on the other hand from the pumping arrangement 49, the valve V₄ is opened and the gas within the probe chamber 47 is analyzed. From the amount of analyte present in the gas probe and in dependency of the time span T, the leak rate and thus the largeness of one or more than one leak in the container 3 may be calculated.

The volume of the probe chamber 47 is thereby selected substantially smaller than the difference volume ΔV of the inner volume of test chamber 30 and the volume of container 3. The probe loaded in small probe chamber 47 may be tapped off from the test chamber 30 as schematically shown in fig. 5 at a locus optimally remote from surfaces which might possibly falsify the analyte by gas desorption.

Further, due to the fact that the probe chamber 47 is relatively small, probe loading which is performed in a short time span τ does not cause turbulences in the test chamber 30 which might lead again to insignificant analyte concentration.

As shown in dash line pumping arrangement 49' may be interconnected between the probe chamber 47 and the test chamber 30. By doing so the gas pressure in the small probe chamber 47 may be risen to a value higher than the gas pressure in the test chamber 30. Thereby, the density of analyte in the probe chamber 49 is increased with respect to density in the test chamber 30, which increases the monitoring accuracy by the mass spectrometer 34.

If the mass spectrometer 34 monitors an amount of analyte in the gas probe which is higher than a predetermined threshold value there is generated, as schematically shown in fig. 5, a small leak indicative signal SL which leads to ejection of the container 3 as did a large leakage indicative signal from evaluation unit 53, otherwise the container is freed for exploitation.

As has been addressed the present invention in one mode of the method as well as of the apparatus is directed on inline testing containers, which means the containers are conveyed towards, through and from a testing station, wherein testing according to the invention is performed.

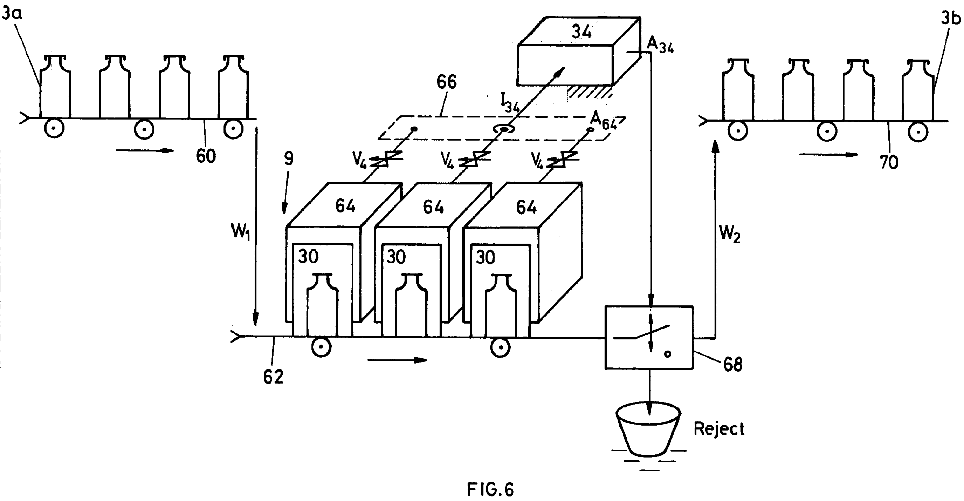

According to fig. 6 containers 3a of unknown leakiness characteristic are conveyed by a conveyer 60 from the filling and sealing stations 1 and 7 as shown in fig. 1 towards a testing station 9 according to fig. 1. In spite of the fact that container testing might be performed as the containers are conveyed on the conveyor 60, according to fig. 6 the containers 3a of unknown leakiness characteristics are transferred to a testing conveyor 62 as schematically shown by the transition arrow W₁ in fig. 6. On the testing conveyor 62 a test chamber 30 is applied to each container. To each test chamber 30 there is associated, moved by the conveyor 62, a test chamber evaluation unit 64 which may be, with an eye on fig. 5, conceived like the unit 64 delimited by dash-dotted line in fig. 5. Each test chamber evaluation unit 64 comprises a line output according to A64 in fig. 5 which is to be brought in gas flow communication with an input I₃₄ to the mass spectrometer arrangement 34. The mass spectrometer arrangement 34 is thereby e.g. stationary with respect to conveyor 62. With the outputs A64 moving with the conveyor 62 and the input 134 stationary, there is performed as shown in fig. 6 by dash lined unit 66, time multiplexing of the multitude of outputs A64 to the one input 134 to the mass spectrometer arrangement 34.

As further schematically shown in fig. 6 the output signal of the mass spectrometer arrangement 34 controls a gate unit 68. If the output signal A₃₄ of the mass spectrometer arrangement 34 indicates leakiness of a container larger than a predetermined extent, then the gate unit 68 is controlled to reject the respective container. On the other hand, if the output signal A₃₄ of the mass spectrometer arrangement 34 indicates that the addressed container has not a leak which is equal or larger than the addressed predetermined extent, the respective container is transited, as shown by the arrow W₂, to an output conveyor 70 and is fed by this conveyor 70 e.g. to a packaging station for further exploitation according to step 5 of fig. 1. These containers 3b are established as unleaky. The conveyor 70 may be the same conveyor as conveyor 60, and further as was addressed, the conveyor 62 may also be realized by the conveyor 60. In one embodiment at least conveyor 62, but possibly also conveyors 60 and/or 70 are realized by carousel-type conveyors.

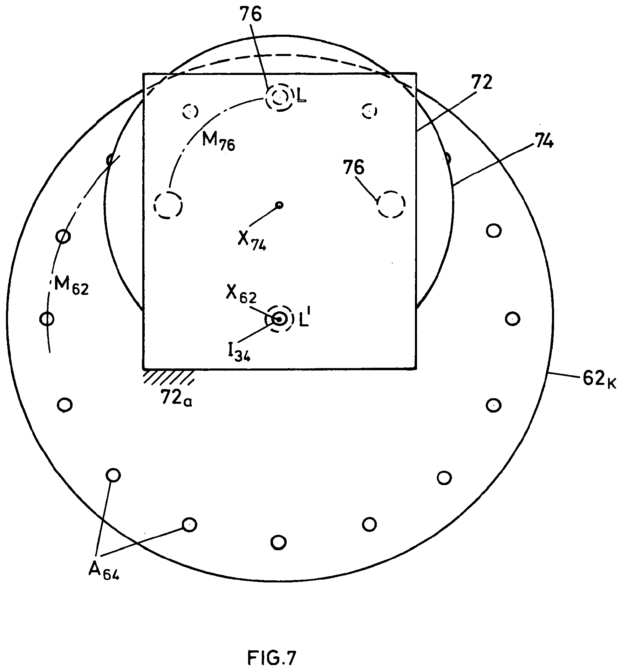

Multiplexing the outputs A₆₄ of the test chamber evaluation units 64 to the one input I₃₄ to the mass spectrometer arrangement 34 is performed in one mode of realization, which is today preferred, via a collector arrangement. One realization form of such collector arrangement to perform the addressed multiplexing shall be explained with the help of fig. 7. According to fig. 7 the conveyor 62 of fig. 6 is conceived as a carousel conveyor 62_{K}. Along the periphery of conveyor 62_{K} a number of outputs A₆₄ according to the number of test chambers and test chamber units provided upon conveyor 62_{K} (not shown in fig. 7) is provided as openings through the substantially plate-shaped carousel conveyor 62_{K}. The carousel conveyor 62_{K} is drivingly rotatable about an axis X₆₂.
There is further provided a plate 72 which is shown in fig. 7 for sake of clarity as a square plate. This plate 72 is coupled to the mass spectrometer arrangement 34 of fig. 6 and is thus as schematised at 72ₐ stationary. The plate 72 has an opening shown in rigid line which is the input I₃₄ to the mass spectrometer arrangement 34 not shown in fig. 7.
Sandwiched between the carousel conveyor 62_{K} and the stationary plate 72 there is provided a collector plate 74 which is rotatably drivable about an axis X₇₄. The collector plate 74 has, distributed along its periphery, collector chambers, according to fig. 7 four of them, which are shown in fig. 7 for clearness' sake with a larger diameter than the openings A64 and the opening 134. The collector chambers 76 are in fact through-openings through the collector plate 74. The moving path of the collector chambers 76, M₇₆, intersect the moving path M₆₂ of the output openings A₆₄ at a single locus L, where a collector chamber 76 may be brought in alignment with one of the output openings A₆₄. Thus, it is in this local position L that e.g. according to fig. 5 by opening a respective valve V₄ gas from probe chamber 47 is flown into one of the collector chambers 76 of collector plate 74. Note that the plate 72 seals one side of the collector chambers 76, whereas the carousel conveyor 62_{K} seals the other side of the addressed collector chambers 76. Along the trajectory path M₇₆ the collector chambers are thus both sided sealed with the exception of the position L, where one of the collector chambers 76 is in free gas flow communication with one of the outputs A₆₄ and of a position L', where one of the collector chambers 76 is in gas flow communication with input I₃₄ to the mass spectrometer arrangement 34.

Thus, by providing a collector arrangement to collect gas probes from subsequent test chamber evaluations units 64 as of fig. 6 and transporting such probes consecutively to the input 134 to the mass spectrometer, multiplexing as was addressed with reference 66 in fig. 6 is performed.

Especially when the method and/or apparatus according to the present invention are conceived for inline container testing, it is highly recommended to apply a SIFT mass spectrometer equipment.

The present invention may also be considered under the following aspects:
The invention relates to the field of quality control and in particular leak testing.

It may be said a method for evaluating a quality of a number of closed filled containers filled with a filling product, such method comprising detecting at least one analyte by means of a mass spectroscopy technique, wherein said at least one analyte comprises at least one of
- said filling product;
- one or more components of said filling product;
- a decomposition product of said filling product;
- one or more decomposition products of one or more components of said filling product.

It addresses such method wherein the detecting is carried out for each of the number of containers.

Under one aspect at least one the analyte is detected in material that escaped from one of the number of containers, in particular wherein the material is a fluid, more particularly a gas.

Under one aspect the analyte is a fluid, in particular a gas.

Under one aspect if a tracer material is contained in the number of containers, the analyte is different from the tracer material.

Under one aspect the analyte is neither Nitrogen nor Helium, in particular wherein it is also not Argon.

Under one aspect the analyte comprises at least one organic compound.

Under one aspect the mass spectroscopy technique is a quadruple mass spectroscopy technique.

Under one aspect a soft ionization technique is used for ionization in the mass spectroscopy technique.

Under one aspect pre-defined precursors are ionized for generating particles for ionization in the mass spectroscopy technique, in particular water vapor is ionized for generating particles for ionization in the mass spectroscopy technique.

Under one aspect ions used for ionization in the mass spectroscopy technique are generated in a plasma, in particular in a microwave plasma.

Under one aspect ions used for ionization in the mass spectroscopy technique are selected by means of a quadruple magnetic field.

Under one aspect N different species of ions are used for ionization in the mass spectroscopy technique, wherein 1 ≤ N ≤ 6, in particular 2 ≤ N ≤ 5, more particularly 2 ≤ N ≤ 4, even more particularly N = 3.

Under one aspect the quality is or comprises a leak tightness of the containers.

Under one aspect the quality is or comprises an age of the containers.

Under one aspect the quality is or comprises a remaining time period before deterioration of the filled product.

Under one aspect the invention comprises determining, in dependence of a result of the detecting, a value indicative of the quality, in particular wherein the determining is carried out for each of the number of containers; and in particular wherein the value is determined in dependence of results of at least or exactly two such detecting steps, more particularly wherein the at least or exactly two detecting steps have been carried out at different times, and in particular wherein the value is dependent on a difference formed from said results of the at least or exactly two such detecting steps, and in particular wherein a pre-treatment is applied to the respective container between the at least or exactly two detecting steps.

Under one aspect the invention compres determining, in dependence of a result of the detecting, a value indicative of a leakage rate for leakage of the at least one analyte from the containers, in particular wherein the determining is carried out for each of the number of containers.

Under one aspect the invention comprises determining, in dependence of a result of the detecting, a value indicative of a leakage rate for leakage of said filled product from the containers, in particular wherein the determining is carried out for each of the number of containers.

Under one aspect the invention comprises determining, in dependence of a result of the detecting, a value indicative of a tightness of the containers with respect to the analyte, in particular wherein the determining is carried out for each of the number of containers.

Under one aspect the invention comprises determining, in dependence of a result of the detecting, a value indicative of a tightness of the containers with respect to the filled product, in particular wherein the determining is carried out for each of the number of containers.

Under one aspect the invention is carried out in an in-line fashion, in particular after a closing or sealing step for closing or sealing the containers.

Under one aspect of the invention a mass spectrometer is used for carrying out the detecting which is adjusted for specifically detecting the at least one analyte.

Under one aspect the invention comprises transporting the number of containers on a conveyor.

Under one aspect the invention comprises transporting the number of containers on a conveyor and rejecting containers having a result of the detecting beyond a threshold result.

Under one aspect detecting is carried out subsequently for different containers, a subsequent detecting step starting within 5 seconds after a start of a previous detecting step, in particular within 1 second, more particular within 0.5 seconds, even more particularly within 0.2 seconds.

Under one aspect the quality is or comprises a diffusion rate of the analyte out of the containers, in particular wherein the quality relates to a diffusion rate of the analyte out of the containers in excess to a threshold diffusion rate of the analyte out of the containers.

Under one aspect the quality is or comprises a diffusion rate of the analyte out of the containers, and comprises quantitatively determining the diffusion rate.

Under one aspect the invention comprises detecting at least two of the analytes by means of the mass spectroscopy technique, in particular detecting at least three of the analytes by means of the mass spectroscopy technique.

Under one aspect the invention comprises guiding material from the environment of each of the number of containers into a mass spectrometer used for carrying out the detecting, in particular wherein the material is extracted from an ambient air environment of each of the number of containers; or
- guiding material from the environment of at least two, in particular of two or of three or of four of the number of containers into a mass spectrometer used for carrying out the detecting, in particular wherein the material is extracted from an ambient air environment of the at least two of the number of containers.

Under one aspect the invention comprises inserting one of the containers or a portion thereof into a test chamber and carrying out the detecting at the test chamber, in particular doing so for each of the number of containers.

Under one aspect the invention comprises for each container of the number of containers:
- enclosing the respective container or a portion thereof in a test chamber, the test chamber comprising no further of the number of containers and no portion of a further of the number of containers;
- extracting material from the test chamber; and
- guiding the extracted material into a mass spectrometer used for carrying out the detecting.

Under one aspect a multitude of such test chambers are provided, and at one time, several of the test chambers enclose one container and a portion thereof, respectively.

Under one aspect the respective container and the portion thereof, respectively, is exerted to a pre-treatment in the respective test chamber, in particular the pre-treatment is carried out at the respective container before the detecting is carried out for the material extracted from the respective test chamber enclosing the respective container and the portion thereof, respectively.

Under one aspect the pre-treatment comprises at least one of
- increasing the pressure in the test chamber and/or effecting an overpressure in the test chamber;
- decreasing the pressure in the test chamber and/or effecting an underpressure in the test chamber;
- purging the test chamber and/or effecting a gas flow through the test chamber;
- increasing humidity in the test chamber and/or guiding water vapour into the test chamber;
- decreasing humidity in the test chamber;
- applying a mechanical force to at least one portion of the respective container, in particular so as to change a pressure inside the respective container and/or so as to deform said respective container;
- pushing or pressing at least one solid member against at least one portion of the respective container.

Under one aspect the invention comprises letting the respective container and the portion thereof, respectively, remain enclosed by the respective test chamber, in particular doing so for increasing a concentration of the at least one analyte in the respective test chamber with time.

Under one aspect the respective container and the portion thereof, respectively, remains enclosed by the test chamber for more than 1 second, in particular for more than 4 seconds, and/or wherein a time during which the respective container and the portion thereof, respectively, remains enclosed by the test chamber is chosen in dependence of a result of the detecting.

Under one aspect the invention comprises at least one of the steps
- applying a mechanical force to at least one portion of the respective container, in particular so as to change a pressure inside the respective container and/or so as to deform the respective container;
- pushing or pressing at least one solid member against at least one portion of the respective container;
in particular wherein this is carried out before the detecting and/or during the detecting.

Under one aspect at least a portion of the container is at least substantially formed by a foil.

Under one aspect the invention comprises
- carrying out the detecting at one or more calibration sample containers, in particular by detecting the at least one analyte in material that escaped from at least one of the one or more calibration sample containers; and
- using results thereof for calibration.

Please note that all the aspects addressed to now may be combined unless being contradictory.

Further the invention may be considered under the still following aspects:
Under the aspect of an apparatus for evaluating a quality of closed filled containers filled with a filling product, the apparatus comprising a mass spectrometer adjusted for detecting at least one analyte, wherein the at least one analyte comprises at least one of
- the filling product;
- one or more components of the filling product;
- a decomposition product of the filling product;
- one or more decomposition products of one or more components of the filling product.

Under one aspect the invention further comprises a conveyor for transporting a multitude of the containers.

Under one aspect the invention further comprises an extraction unit structured and configured for extracting material from an ambient environment, in particular from an ambient environment of the containers, and a guiding unit structured and configured for guiding the extracted material to the mass spectrometer, in particular wherein the guiding unit is or comprises a capillary.

Under one aspect the invention comprises one or more test chambers each structured and configured for enclosing exactly one of the containers or a portion thereof and further comprising a handling unit structured and configured for moving at least one container and/or the one or more test chamber so as to accomplish that a respective container or a portion thereof is inserted into a respective test chamber and removed there from again.

Under one aspect the invention comprises at least one of
- a pressurizing unit structured and configured for increasing the pressure in at least one of the one or more test chambers and/or for effecting an overpressure in at least one of the one or more test chambers;
- a vacuumizing unit structured and configured for decreasing the pressure in at least one of the one or more test chambers and/or for effecting an underpressure in at least one of the one or more test chambers;
- a purging unit structured and configured for purging at least one of the one or more test chambers and/or for effecting a gas flow in at least one of the one or more test chambers;
- a humidifying unit structured and configured for increasing humidity in at least one of the one or more test chambers and/or for guiding water vapour into at least one of the one or more test chambers;
- a dehumidifying unit structured and configured for decreasing humidity in at least one of the one or more test chambers;
- a unit for applying a mechanical force to at least one portion of the respective container, in particular for changing a pressure inside the respective container and/or for deforming the respective container;
- a unit for pushing or pressing at least one solid member against at least one portion of the respective container.

Under one aspect the invention comprises an evaluation unit structured and configured for evaluating the quality for each of the containers from at least one detection result obtained by the mass spectrometer by detecting the at least one analyte for the respective container, in particular wherein the evaluation unit is structured and configured for evaluating the quality for each of the containers from at least or exactly two detection results obtained by the mass spectrometer by detecting the at least one analyte for the respective container at different times, in particular wherein the evaluation unit is structured and configured for determining a difference from the at least or exactly two detection results.

Under one aspect the apparatus is a container tightness tester.

Please note that the aspects as additionally addressed may all be combined unless being contradictory. This is also valid for the subsequently addressed aspects of the invention.

Under a further aspect the invention addresses a production line for producing closed filled containers, comprising at least one apparatus according to one of aspects addressed above.

Under one aspect the invention thereby further comprises a sealing unit structured and configured for closing said containers, in particular wherein the apparatus is connected to the sealing unit by means of a conveyor structured an configured for transporting the containers from the sealing unit to the apparatus.

Under one aspect the invention further comprises a filling unit structured and configured for filling the containers with the filling product, in particular wherein the filling unit is connected to the sealing unit by means of a conveyor structured an configured for transporting the containers from the filling unit to the sealing unit.

Under one aspect the invention addresses a use of a mass spectroscopy technique for evaluating a quality of a number of closed filled containers filled with a filling product by detecting at least one analyte by means of the mass spectroscopy technique, wherein the at least one analyte comprises at least one of
- the filling product;
- one or more components of the filling product;
- a decomposition product of the filling product;
- one or more decomposition products of one or more components of the filling product;
in particular comprising extracting material from an environment of each of the number of containers or from an environment of two or more of the number of containers, and detecting the at least one analyte in the extracted material.

Under one aspect the invention addresses a method for determining a leak tightness of a number of closed filled containers filled with a filling product, the method comprising detecting at least one analyte by means of a mass spectroscopy technique, wherein the at least one analyte comprises at least one of
- the filling product;
- one or more components of the filling product;
- a decomposition product of the filling product;
- one or more decomposition products of one or more components of the filling product;
in particular wherein said method comprises determining the leak tightness from a result of the detecting, and in particular wherein the method is carried out in an in-line fashion following a closing step for closing the containers.

Under one aspect the invention addresses a method for in-line leak-testing closed filled containers filled with a filling product, comprising for each of the containers the step of detecting at least one analyte by means of a mass spectroscopy technique, wherein the at least one analyte comprises at least one of
- the filling product;
- one or more components of the filling product;
- a decomposition product of the filling product;
- one or more decomposition products of one or more components of the filling product.

Under one aspect the invention addresses a method for manufacturing closed filled containers filled with a filling product, comprising for each container to be manufactured the steps of
- filling the respective filling product into the respective container or into a portion thereof;
- closing the respective container;
- extracting material from an environment of the respective of container;
- guiding the extracted material to a mass spectrometer;
- detecting by means of the mass spectrometer at least one analyte in the extracted material;
wherein the at least one analyte comprises at least one of
- the filling product;
- one or more components of the filling product;
- a decomposition product of the filling product;
- one or more decomposition products of one or more components of the filling product.

Under one aspect the invention further addresses a method for manufacturing at least one closed container containing a consumer-product and which container does fulfil predetermined leakiness conditions comprising
- providing a closed container filled with said consumer-product
- establishing, whether such container fulfils at least one predetermined unleakiness condition comprising analyzing a surrounding of the container with respect to an impact on the surrounding from the consumer-product by means of mass spectroscopy.

Under one aspect such method further comprises first detecting whether the container has a leak in excess of a predetermined amount and subjecting the container only then to the mass spectroscopy if there is detected that the addressed container has no leak in excess of the amount.

Under one aspect detection of whether the container has a leak in excess of the amount is performed by evaluating the pressure in a surrounding of the container.

Under one aspect the invention addresses an apparatus for detecting leakiness of a container which is sealed and filled with a consumer product, comprising a mass spectroscopy arrangement which is established to analyze a gaseous surrounding of the container with respect to an impact which is dependent on the consumer product.

We repeat, that two or more aspects of the invention which have been addressed may be applied in any combination unless they are in mutual contradiction.

## Claims

1. A method for leak testing containers (3) filled with a consumer product, comprising the step of monitoring presence in the surrounding of said container of at least one analyte, the material composition thereof being dependent from said consumer product and exploiting a result of said monitoring as leak indicative, said monitoring comprising mass spectrometry, the method comprising inline testing up to each container of a stream of said containers, providing subsequent containers of said stream within respective test chambers (30,64) moved as a test chamber stream, controllably time multiplexing an operational gas stream-connection from the interiors of said test chambers to an input port (I₃₄) of a single arrangement (34) performing said mass spectrometry,
- controllably connecting each of said test chambers, moved as a test chamber stream, to a respective output line (A64), **characterised in that** the method further comprises
• providing at least two collector chambers (76),
• moving said collector chambers into gas stream communication with respective ones of said output lines and collecting in said at least two collector chambers a dose of gas from respective different ones of said output lines (A64),
• sequentially moving one of said collector chambers after the other of said collector chambers with said respectively collected dose into gas stream communication with said input port (I₃₄) and dispatching sequentially one of said doses after the other into said input port (I₃₄).

2. The method of claim 1, wherein said consumer product comprises at least one of a solid and of a liquid product material and said analyte is dependent on at least one of said product materials.

3. The method according to claim 2, wherein said analyte is in gaseous state or said analyte is in solid or liquid state and converted in gaseous state before performing said mass spectrometry.

4. The method of one of claims 1 to 3, wherein said consumer product comprises material in gaseous state and said analyte depends from said material in gaseous state.

5. The method according to one of the preceding claims, wherein said mass spectroscopy comprises applying a quadrupole mass spectrometer arrangement.

6. The method of claim 5, wherein said mass spectrometry comprises applying selected ion flow tube mass spectrometry, SIFT.

7. Method of manufacturing closed containers filled with a consumer product and which are unleaky, comprising providing a container, filling said container exclusively with a consumer product which the container is intended to store, closing the filled container and subjecting the closed and filled container to the method of leak testing according to one of claims 1 to 6 and establishing said container to be unleaky in dependency of said result of monitoring by said method of leak testing.

8. Apparatus for leak testing closed and filled containers (3), comprising a conveyor arrangement (60) for inline conveying a multitude of said containers towards, through and from a leak testing station, said leak testing station comprising a mass spectrometer controllably operationally connectable to a surrounding of each of said containers, an output signal of the mass spectrometer (34) being decisive for unleakiness of each container, wherein the apparatus further comprises conveyed in said leak testing station by a conveyor (62), at least two sealingly closable test chambers (30,64) each to accommodate at least one of said containers, said mass spectrometer being controllably operationally connectable to the inside of each of said test chambers, gas stream lines, each controllably operationally connected to one of said conveyed test chambers and each having a line output (A64), a mass spectrometer input line operationally connected to said mass spectrometer and having a line input (I₃₄), **characterised in that** the apparatus further comprises
a drivingly movable collector arrangement (62_{K}) comprising at least two collector chambers (76) each with a chamber input opening and with a chamber output opening, said collector arrangement being movable so that said chamber input openings are consecutively positioned in gas flow communication with a respective one of said line outputs (A64), and so that said chamber output openings are consecutively positioned in gas flow communication with said line input (I₃₄) to said mass spectrometer.

9. The apparatus of claim 8 comprising a leak testing means for operating without mass spectrometry and generating a leak indicating signal for each of said containers, said leak indicating signal disabling an operational connection of said inside of a respective test chamber to said mass spectrometer.

10. The apparatus of claim 8 or 9, each of said test chambers being controllably operationally connected to an evacuation pump and to at least one pressure sensor, the output of said pressure sensor being operationally connected to an input of an evaluation unit generating an output signal indicating a leak of a container under test in the respective test chamber, said output signal disabling an operational connection from said respective test chamber to said mass spectrometer.

11. The apparatus of one of claims 8 to 10 comprising a multiplexing arrangement time multiplexing an operational connection of said test chambers to said mass spectrometer.

12. The apparatus of one of claims 8 to 11, wherein said mass spectrometer is controllably operationally connected to the inside of each of said test chambers via a respective probe chamber.

13. The apparatus of one of the claims 8 to 12, wherein said mass spectrometer is a quadrupole mass spectrometer.

14. The apparatus of one of the claims 8 to 13, wherein said mass spectrometer is a selected ion flow tube mass spectrometer, SIFT.

15. The apparatus according to one of the claims 8 to 14 comprising at least one of:
• a heating and/or cooling arrangement for a line arrangement interconnecting the outside surface of a respective container and said mass spectrometer;
• a flushing gas source in controlled communication with a line arrangement interconnecting the outside surface of a respective container and said mass spectrometer;
• a plasma source and a reactive gas source acting upon a line arrangement interconnecting the outside surface of a respective container and said mass spectrometer.

## Patentansprüche

1. Verfahren zur Dichtigkeitsprüfung von Behältern (3), die mit einem Verbraucherprodukt gefüllt sind, umfassend den Schritt des Überwachens der Gegenwart, in der Umgebung des Behälters, wenigstens eines Analyten, dessen Materialzusammensetzung von dem Verbraucherprodukt abhängig ist, und Nutzen eines Ergebnisses der Überwachung als Hinweis auf ein Leck, wobei die Überwachung Massenspektrometrie umfasst,
wobei das Verfahren die Schritte umfasst:
Inline-Prüfen bis hin zu jedem Behälter eines Stroms der Behälter,
Bereitstellen nachfolgender Behälter des Stroms in entsprechenden Prüfkammern (30, 64), die als Prüfkammernstrom bewegt werden,
steuerbar Zeitmultiplexieren einer operativen Gasströmungsverbindung des Inneren der Prüfkammern mit einer Einlassöffnung (I₃₄) einer einzigen Anordnung (34), welche die Massenspektrometrie durchführt,
steuerbares Verbinden jeder der Prüfkammern, die als Prüfkammernstrom bewegt werden, mit einer entsprechenden Auslassleitung (A64),
**dadurch gekennzeichnet, dass** das Verfahren ferner die Schritte umfasst:
• Bereitstellen wenigstens zweier Kollektorkammern (76),
• Bewegen der Kollektorkammern in eine Gasströmungsverbindung mit entsprechenden der Auslassleitungen und Sammeln einer Gasdosis aus entsprechenden unterschiedlichen der Auslassleitungen (A64) in den wenigstens zwei Kollektorkammern,
• sequenzielles Bewegen einer der Kollektorkammern nach der anderen der Kollektorkammern mit der jeweils gesammelten Dosis in eine Gasströmungsverbindung mit der Einlassöffnung (I₃₄) und sequenzielles Abgeben einer der Dosen nach der anderen in die Einlassöffnung (I₃₄).

2. Verfahren nach Anspruch 1, wobei das Verbraucherprodukt wenigstens eines von Folgendem umfasst: ein festes und ein flüssiges Produktmaterial, und der Analyt von wenigstens einem der Produktmaterialien abhängig ist.

3. Verfahren nach Anspruch 2, wobei der Analyt in gasförmigem Zustand vorliegt oder der Analyt in festem oder flüssigem Zustand vorliegt und vor der Durchführung der Massenspektrometrie in den gasförmigen Zustand umgewandelt wird.

4. Verfahren nach einem der Ansprüche 1 bis 3, wobei das Verbraucherprodukt Material in gasförmigem Zustand umfasst und der Analyt von dem Material in gasförmigem Zustand abhängt.

5. Verfahren nach einem der vorhergehenden Ansprüche, wobei die Massenspektroskopie die Anwendung einer Quadrupolmassenspektrometer-Anordnung umfasst.

6. Verfahren nach Anspruch 5, wobei die Massenspektrometrie die Anwendung einer ausgewählten Ionenflussrohr-Massenspektrometrie, SIFT, umfasst.

7. Verfahren zur Herstellung geschlossener Behälter, die mit einem Verbraucherprodukt gefüllt und dicht sind, umfassend die Schritte: Bereitstellen eines Behälters, Füllen des Behälters ausschließlich mit einem Verbraucherprodukt, für dessen Lagerung der Behälter vorgesehen ist, Schließen des gefüllten Behälters und Unterziehen des geschlossenen und gefüllten Behälters dem Verfahren zur Dichtigkeitsprüfung nach einem der Ansprüche 1 bis 6 und Feststellen der Dichtigkeit des Behälters abhängig vom Ergebnis der Überwachung durch das Verfahren zur Dichtigkeitsprüfung.

8. Vorrichtung zur Dichtigkeitsprüfung geschlossener und gefüllter Behälter (3), umfassend eine Förderanlage (60) zum Inline-Fördern einer Vielzahl der Behälter zu einer Dichtigkeitsprüfstation, durch diese hindurch und aus dieser heraus, wobei die Dichtigkeitsprüfstation ein Massenspektrometer umfasst, das in steuerbarer Weise mit einer Umgebung jedes der Behälter operativ verbindbar ist, wobei ein Ausgangssignal des Massenspektrometers (34) für die Dichtigkeit jedes Behälters entscheidend ist, wobei die Vorrichtung ferner Folgendes, durch eine Fördereinrichtung (62) in der Dichtigkeitsprüfstation gefördert, umfasst:
wenigstens zwei dicht verschließbare Prüfkammern, die jeweils wenigstens einen der Behälter aufnehmen, wobei das Massenspektrometer in steuerbarer Weise mit dem Inneren der Prüfkammern operativ verbindbar ist,
Gasstromleitungen, die jeweils in steuerbarer Weise mit einer der geförderten Prüfkammern operativ verbunden sind und jeweils einen Leitungsauslass (A64) aufweisen,
eine Massenspektrometer-Eingangsleitung, die operativ mit dem Massenspektrometer verbunden ist und einen Leitungseinlass (I₃₄) aufweist,
**dadurch gekennzeichnet, dass** die Vorrichtung ferner umfasst:
eine verfahrbare Kollektor-Anordnung (62K), umfassend wenigstens zwei Kollektorkammern (76), jeweils mit einer Kammereinlassöffnung und einer Kammerauslassöffnung, wobei die Kollektor-Anordnung so verfahrbar ist, dass die Kammereinlassöffnungen nacheinander in Gasströmungsverbindung mit einem entsprechenden der Leitungsauslässe (A64) positioniert sind, und dass die Kammerauslassöffnungen nacheinander in Gasströmungsverbindung mit dem Leitungseinlass (I₃₄) zum Massenspektrometer positioniert sind.

9. Vorrichtung nach Anspruch 8, umfassend eine Dichtigkeitsprüfeinrichtung zum Betrieb ohne Massenspektrometer, die ein Leckagehinweissignal für jeden der Behälter erzeugt, wobei das Leckagehinweissignal eine operative Verbindung des Inneren einer entsprechenden Prüfkammer mit dem Massenspektrometer sperrt.

10. Vorrichtung nach Anspruch 8 oder 9, wobei jede der Prüfkammern in steuerbarer Weise operativ mit einer Entlüftungspumpe und mit wenigstens einem Drucksensor verbunden ist, wobei der Ausgang des Drucksensors mit einem Eingang einer Auswerteeinheit operativ verbunden ist, die ein Ausgangssignal erzeugt, das auf ein Leck eines in der jeweiligen Prüfkammer geprüften Behälters hinweist, wobei das Ausgangssignal eine operative Verbindung von der jeweiligen Prüfkammer zum Massenspektrometer sperrt.

11. Vorrichtung nach einem der Ansprüche 8 bis 10, umfassend eine Multiplexier-Anordnung zur Zeitmultiplexierung einer operativen Verbindung der Prüfkammern mit dem Massenspektrometer.

12. Vorrichtung nach einem der Ansprüche 8 bis 11, wobei das Massenspektrometer in steuerbarer Weise mit dem Inneren jeder der Prüfkammern über eine entsprechende Probenkammer operativ verbunden ist.

13. Vorrichtung nach einem der Ansprüche 8 bis 12, wobei das Massenspektrometer ein Quadrupolmassenspektrometer ist.

14. Vorrichtung nach einem der Ansprüche 8 bis 13, wobei das Massenspektrometer ein ausgewähltes Ionenflussrohr-Massenspektrometer, SIFT, ist.

15. Vorrichtung nach einem der Ansprüche 8 bis 14, umfassend wenigstens eines von Folgendem:
• eine Heiz- und/oder Kühlanordnung für eine Leitungsanordnung, welche die Außenfläche eines entsprechenden Behälters mit dem Massenspektrometer verbindet;
• eine Spülgasquelle in gesteuerter Verbindung mit einer Leitungsanordnung, welche die Außenfläche eines entsprechenden Behälters mit dem Massenspektrometer verbindet;
• eine Plasmaquelle und eine Reaktivgasquelle, die eine Leitungsanordnung beaufschlagen, welche die Außenfläche eines entsprechenden Behälters mit dem Massenspektrometer verbindet.

## Revendications

1. Procédé pour tester l'étanchéité de récipients remplis d'un produit de consommation comprenant l'étape consistant à surveiller la présence dans l'environnement dudit récipient d'au moins un analyte, la composition matérielle de ce dernier dépendant dudit produit de consommation, et à utiliser un résultat dudit contrôle comme indicateur de fuite, ledit contrôle comprenant une spectrométrie de masse, le procédé consistant à tester en ligne chaque récipient d'un flux desdits récipients, à amener les récipients suivants dudit flux dans des chambres d'essai respectives (30, 64) déplacées comme un flux de chambre d'essai, à multiplexer temporellement de manière contrôlable une connexion de flux de gaz opérationnelle depuis l'intérieur desdites chambres d'essai vers un port d'entrée (I₃₄) d'un dispositif unique (34) effectuant ladite spectrométrie de masse, à connecter de manière contrôlable chacune desdites chambres d'essai, déplacées comme un flux de chambre d'essai, à une ligne de sortie (A64) respective,
**caractérisé en ce que** le procédé consiste en outre à
- fournir au moins deux chambres collectrices (76),
- déplacer lesdites chambres collectrices dans une communication de flux de gaz avec les lignes respectives desdites lignes de sortie et collecter dans lesdites au moins deux chambres collectrices une dose de gaz provenant des différentes lignes desdites lignes de sortie (A64),
- déplacer de façon séquentielle l'une desdites chambres collectrices après l'autre desdites chambres collectrices avec ladite dose collectée respectivement dans la communication de flux de gaz avec ledit port d'entrée (I₃₄), et répartir de façon séquentielle l'une desdites doses après l'autre dans ledit port d'entrée (I₃₄).

2. Procédé selon la revendication 1, dans lequel ledit produit de consommation comprend au moins un matériau solide et un matériau liquide, et dans lequel ledit analyte dépend d'au moins un desdits matériaux.

3. Procédé selon la revendication 2, dans lequel ledit analyte est à l'état gazeux ou ledit analyte est à l'état solide ou liquide et transformé à l'état gazeux avant d'effectuer ladite spectrométrie de masse.

4. Procédé selon l'une des revendications 1 à 3, dans lequel ledit produit de consommation comprend un matériau à l'état gazeux et ledit analyte dépend dudit matériau à l'état gazeux.

5. Procédé selon l'une des revendications précédentes, dans lequel ladite spectrométrie de masse consiste à appliquer un dispositif de spectrométrie de masse quadripôle.

6. Procédé selon la revendication 5, dans lequel ladite spectrométrie de masse consiste à appliquer une spectrométrie de masse à tube d'écoulement ionique sélectionné, SIFT.

7. Procédé pour fabriquer des récipients fermés remplis d'un produit de consommation et qui sont étanches, consistant à fournir un récipient, à remplir ledit récipient exclusivement avec un produit de consommation que le récipient est destiné à conserver, à fermer le récipient rempli et à soumettre le récipient fermé et rempli au procédé d'essai d'étanchéité selon l'une des revendications 1 à 6, et à établir que ledit récipient est étanche en fonction dudit résultat de la surveillance par ledit procédé d'essai d'étanchéité.

8. Appareil pour tester l'étanchéité de récipients fermés et remplis (3), comprenant un dispositif de convoyage (60) pour transporter en ligne une multitude desdits récipients vers, à travers et depuis une station d'essai d'étanchéité, ladite station d'essai d'étanchéité comprenant un spectromètre de masse pouvant être raccordé de façon opérationnelle et contrôlable à un environnement de chacun desdits récipients, un signal de sortie du spectromètre de masse (34) étant décisif pour l'étanchéité de chaque récipient, dans lequel l'appareil comprend en outre, transportées dans ladite station d'essai d'étanchéité par un convoyeur (62), au moins deux chambres d'essai (30, 64) pouvant être fermées de façon étanche chacune pour recevoir au moins un desdits récipients, ledit spectromètre de masse pouvant être raccordé de façon opérationnelle et contrôlable à l'intérieur de chacune desdites chambres d'essai, lignes de flux de gaz, chacune raccordée de façon opérationnelle et contrôlable à l'une desdites chambres d'essai transportées et chacune ayant une sortie de ligne (A64), une ligne d'entrée de spectromètre de masse raccordée de façon opérationnelle audit spectromètre de masse et ayant une entrée de ligne (I₃₄),
**caractérisé en ce que** l'appareil comprend en outre un dispositif collecteur (62K) mobile comprenant au moins deux chambres collectrices (76), chacune avec une ouverture d'entrée de chambre et avec une ouverture de sortie de chambre, ledit dispositif collecteur étant mobile de sorte que lesdites ouvertures d'entrée de chambre sont positionnées de façon consécutive en communication de flux de gaz avec une sortie respective desdites sorties de ligne (A64), et de sorte que lesdites ouvertures de sortie de chambre sont positionnées de façon consécutive en communication de flux de gaz entre ladite entrée de ligne (I₃₄) et ledit spectromètre de masse.

9. Appareil selon la revendication 8 comprenant des moyens d'essai d'étanchéité pour fonctionner sans spectrométrie de masse et générer un signal indicateur de fuite pour chacun desdits récipients, ledit signal indicateur de fuite désactivant une connexion opérationnelle entre ledit intérieur d'une chambre d'essai respective et ledit spectromètre de masse.

10. Appareil selon la revendication 8 ou 9, chacune desdites chambres d'essai étant raccordée de façon opérationnelle et contrôlable à une pompe d'évacuation et à au moins un capteur de pression, la sortie dudit capteur de pression étant raccordée de façon opérationnelle à une entrée d'une unité d'évaluation générant un signal de sortie indiquant une fuite d'un récipient soumis au test dans la chambre d'essai respective, ledit signal de sortie désactivant une connexion opérationnelle entre ladite chambre d'essai respective et ledit spectromètre de masse.

11. Appareil selon l'une des revendications 8 à 10, comprenant un dispositif de multiplexage multiplexant temporellement une connexion opérationnelle entre lesdites chambres d'essai et ledit spectromètre de masse.

12. Appareil selon l'une des revendications 8 à 11, dans lequel ledit spectromètre de masse est raccordé de façon opérationnelle et contrôlable à l'intérieur de chacune desdites chambres d'essai via une chambre d'échantillon respective.

13. Appareil selon l'une des revendications 8 à 12, dans lequel ledit spectromètre de masse est un spectromètre de masse quadripôle.

14. Appareil selon l'une des revendications 8 à 13, dans lequel ledit spectromètre de masse est un spectromètre de masse à tube d'écoulement ionique sélectionné, SIFT.

15. Appareil selon l'une des revendications 8 à 14, comprenant au moins un des éléments suivants :
- un dispositif de chauffage et/ou de refroidissement pour un dispositif de ligne interconnectant la surface extérieure d'un récipient respectif et ledit spectromètre de masse ;
- une source de gaz de rinçage en communication contrôlée avec un dispositif de ligne interconnectant la surface extérieure d'un récipient respectif et ledit spectromètre de masse ;
- une source plasma et une source de gaz réactif agissant sur un dispositif de ligne interconnectant la surface extérieure d'un récipient respectif et ledit spectromètre de masse.
